Europäisches Patentamt

European Patent Office

Office européen des brevets

(19)

(11) Publication number : **0 500 502 A1**

(12)

# EUROPEAN PATENT APPLICATION

(21) Application number : **92830008.6**

(22) Date of filing : **10.01.92**

(51) Int. Cl.⁵ : **B65B 55/02**

Priority: 190291 IT PR91000008.

(30) Priority : **19.02.91**

(43) Date of publication of application :
**26.08.92 Bulletin 92/35**

(84) Designated Contracting States :
**CH DE ES FR GR LI NL PT**

(71) Applicant : **FENCO S.P.A.**
**Via Ravasini, 13/A**
**I-43100 Parma (IT)**

(72) Inventor : **Levati, Ennio**
**Via Torrente Manubiola, 10**
**I-43100 Parma (IT)**

(74) Representative : **Lanzoni, Luciano**
**BUGNION S.p.A. Via Emilia Est, 25**
**I-41100 Modena (IT)**

(54) **A valve for the maintenance of sterile conditions in a filler machine.**

(57)   The invention is in the field of filling machines
under sterile conditions. More precisely, the
invention relates to a valve comprising means
aimed at interrupting the feeding of the product
to the product feeder valves (19), preserving the
sterile conditions of the product feeder conduit
(1). The advantage of the inventions consists in
the fact that that it limits the part of the machine
subject to re-sterilisation after maintenance to
the headers (18), causing a loss of sterile condi-
tions internally to the said headers (18) or the
said filler valves (19).

fig.1

EP 0 500 502 A1

The object of the invention is a valve for the maintenance of sterile conditions in a filler machine.

In the field of such machines, which fill containers with various kinds of food products, one of the causes of long interruptions in productivity is the need to effect a general re-sterilisation of the machine components when problems or breakages occur in the headers or filler valves, which require the opening of the said headers or valves to effect the necessary maintenance or repair work.

Indeed, repair work to the headers which requires the opening up of the said headers causes loss of sterile conditions not only in the headers themselves but also in the components connected to them, such as for example the filler valve and the product feeder conduit.

The re-sterilisation operations are particularly long and therefore bring about considerable costs to the firm due to interruption of production.

An aim of the present invention is that of eliminating the above-described drawbacks and in particular to realise a device for separating the product feeder conduit from the header while maintaining sterile conditions in the said conduit and in all the apparatus connected to it, and thus avoiding the need to re-sterilise in the case of maintenance operations which regard the headers and the filler valves.

Said aims are fully attained by the valve for the maintenance of sterile conditions, object of the present invention, for filler machines in sterile environments, of the type having one or more headers equipped with filler valves, in which headers a branch of a product feeder conduit is inserted, characterised by the fact that the said valve, associated to each header, comprises means aimed at interrupting the product feeding to the filler valve which is out of order and thus at preserving sterile conditions in the product feeder conduit, which means are characterised by:

– a first plug, aimed at closing the branch of the product feeder conduit for the header ;

– a second plug, applied inferiorly to a stem which is slideable internally to the first plug, said second plug being aimed at sealedly closing under sterile conditions the branch of the product feeder conduit to the header in such a way as to create a chamber between the two said first and second plugs;

– means for the immission of steam or sterilising fluid into the said chamber, constituted by cavities for the passage of the sterilising steam between the said stem and the said plug and internally to the stems, said cavities communicating with two conduits, one inlet conduit and one outlet conduit, of the steam.

This and other characteristics will better emerge in the detailed description which follows, of a preferred embodiment of the invention illustrated in the form of a non-limiting example in the accompanying drawings, in which:

– Figure 1 shows the valve, in a section according to a vertical median plane;

– Figure 2 shows a particular of the valve, according to the same section of figure 1, when the valve is activated;

– Figure 3 shows, in a simplified view, a plurality of valves applied to a filler machine.

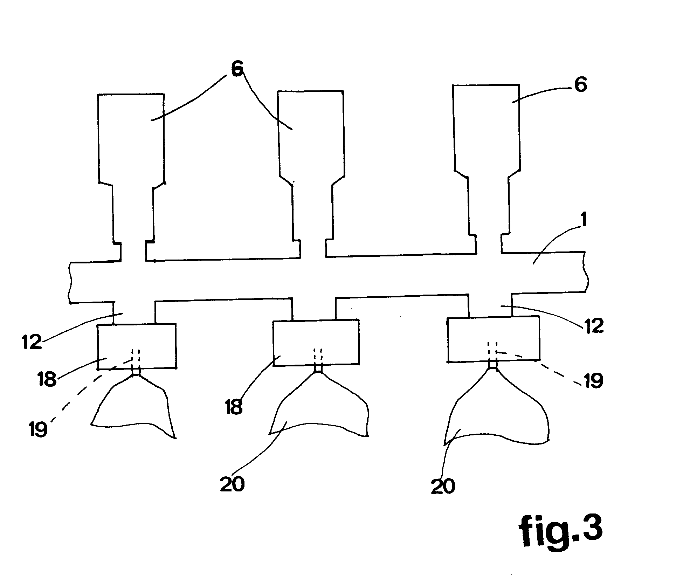

With reference to the drawings, 1 denotes a product feeder conduit, destined to feed one or more headers of known type, indicated by 18 in figure 3, equipped with filler valves 19 through which containers 20 are filled.

A plurality of branches 12 of the conduit 1 place the conduit 1 and the headers 18 in communication.

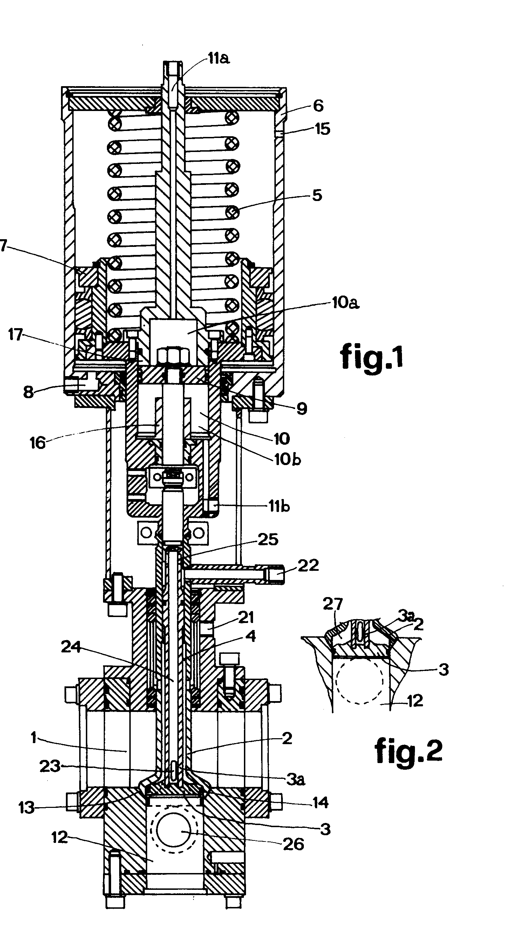

2 denotes a first plug aimed at closing the branch 12 of the conduit 1 by wedging into a conical housing 13, as illustrated in figure 1, in such a way as to isolate the conduit 1 from the header associated to the branch 12.

The first plug 2 is solid to a piston 7 housed internally to a cylinder 6 and is vertically mobile.

The plug is kept in a closed position by means of a spring 5 which presses on the piston 7, while the opening of the plug 2 happens by means of the immission of air or other fluid through an aperture 8 bored into the cylinder 6 in such a way as to raise the piston 7, compressing the spring 5.

The cylinder 6 is equipped with a bleeder hole 15.

According to a variant which is not illustrated, it could be envisaged that the spring 15 be positioned below the piston 7 and the aperture 8 above the piston, so that the spring 5 would be compressed in the case of the plug's 2 being closed.

The spring 5, the piston 7 and the cylinder 6 equipped with aperture 8 and bleed hole 15 constitute means for the activating of the first plug 2.

3 denotes a second plug, applied inferiorly to a stem 3a, which stem 3a is slidable internally to the first plug 2 and which second plug 3 is aimed at sealedly closing the branch 12 of the conduit 1 by means of a seal ring 14 "OR", as illustrated in figure 2.

When the second plug 3 is in the closed position, a chamber 27 is defined between the second plug 3 and the first plug 2, into which steam or other sterilising fluid is introduced.

The stem 3a is solid to a piston 9 which piston is slideable internally to a chamber 10 due to the variation of pressure which occurs in two separate spaces 10a and 10b of the said chamber 10 when air or other fluid is introduced by means of respective inlet conduits 11a and 11b.

Internally to the chamber 10 there are two piston travel limiters, one lower 16 and one upper 17.

The piston 9, which is slideable internally to the chamber 10, together with the inlet conduits 11a and 11b constitute means to activate the second plug 3.

21 and 22 denote respectively an inlet conduit and an outlet conduit for the sterilising steam or condensation or other sterisiling fluid.

The steam, entering through the conduit 21 penetrates into a cavity 4 comprised between the first plug 2 and the stem 3a, passes into a cavity 24 internal to the stem 3a through an aperture 23 bored into the stem 3a itself and exits from another aperture 25 towards the outlet conduit 22.

When the stem is lowered, in the closed position illustrated in figure 2, the steam or other sterilising fluid are in proximity to the upper part of the stem 3a, the opposite part with respect to the second plug 3.

The inlet conduit 21 and the outlet conduit 22 for the steam, with the cavities 4 and 24 constitute means for the immission of steam or other sterilising fluid into the chamber 27.

Said feedig means for the steam or other sterilising fluid are structured in such a way that there is not possibility of introduction of the product into the inlet and outlet conduits 21 and 22 for the sterilising fluid or steam, avoiding thus the possibility of blocking of the said conduits 21 and 22.

The first and second plugs 2 and 3, the stem 3a and the cavities 4 and 24, constitute means aimed at stopping the feeding of the product to the filler valve 19 and at preserving product feeder conduit 1 sterility.

An advantage of the present invention is that when the headers 18 must be cleaned or maintenance on them must be performed, requiring that they be opened, this can be done without the consequent need to clean and sterilise the entire machine, it being necessary only to sterilise the branch 12 and the part of the machine comprised between the branch 12 and the filler valve 19 associated with it.

## Claims

1. A valve for the maintenance of sterile conditions in a filler machine, of the type having one or more headers (18) equipped with a filler valve (19), into which a branch (12) of a product feeder conduit (1) is inserted, characterised by the fact that said valve (19), associated with each header (18), comprises means to interrupt the feeding of the product to the filler valve (19) when the said filler valve (19) is out of order and to preserve the conditions of sterility in the said product feeder conduit (1), said means being constituted by:
   – a first plug (2) for the closing of the branch (12) of the product feeder conduit (1);
   – a second plug (3) applied inferiorly to a stem (3a), said plug (3) beig slideable internally to the said first plug (2) and aimed at sealedly closing, under sterile conditions, the branch (12) of the product feeder conduit (1) in such a way as to form a chamber (27) between the two said first and second plugs (2) and (3);

   – means for the immission of steam or other sterilising fluid in the chamber (27) between said stem (3a) and said plug (2) and internally to said stem (3a) said means being constituted by cavities (4,24) in communication with an inlet conduit (21) and an outlet conduit (22) for the steam.

2. A valve as in claim 1, comprising means for the activating of the said first plug (2) constituted by:
   – a spring (5) housed in a cylinder (6), which spring (5) normally keeps a piston (7) pressed down, which piston (7) is solid to the first plug (2) in such a way that the plug (2) itself is in the closed position;
   – an aperture (8) bored into the cylinder (6), through which air or fluid aimed at moving the piston (7) and the first plug (2) into the open position is introduced, performing the above operation by overcoming the elastic resistance of the said spring (5) by compressing it.

3. A valve as in claim 1, comprising means for the activation of the second plug (3) constituted by a piston (9) solid to the said stem (3a), which piston's (9) sliding internally to a chamber (10) is procuded by the variation of pressure which is created in two separate spaces (10a) and (10b) of the said chamber (10) when in the said separate spaces air or other fluid is introduced by means of respective inlet conduits (11a) and (11b).

**fig.1**

**fig.2**

fig.3

**European Patent Office**

## EUROPEAN SEARCH REPORT

Application Number

EP    92 83 0008

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | US-A-4 524 563 (SASSI) <br> * column 4, line 13 - column 5, line 37; figure 2 * <br> --- | 1 | B65B55/02 |
| A | US-A-3 517 688 (SCHOLLE) <br> * the whole document * <br> --- | 1 | |
| A | GB-A-1 241 791 (GKN SANKEY) <br><br> ----- | | |
| | | | **TECHNICAL FIELDS SEARCHED (Int. Cl.5 )** |
| | | | B65B |

The present search report has been drawn up for all claims

| Place of search | Date of completion of the search | Examiner |
|---|---|---|
| THE HAGUE | 01 JUNE 1992 | CLAEYS H.C.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&  : member of the same patent family, corresponding document

EPO FORM 1503 03.82 (P0401)